# FASCICULE DE BREVET EUROPEEN

(11) **EP 3 996 955 B1**
(45) Date de publication et mention de la délivrance du brevet: **02.09.2026**
(21) Numéro de dépôt: 20735598.3
(22) Date de dépôt: 03.07.2020
(51) Int. Cl.: B60R 13/08, F16B 21/07

(54) **ASSEMBLAGE D'UN ÉCRAN DE PROTECTION ACOUSTIQUE SUR UN MOTEUR DE VÉHICULE AUTOMOBILE**
HALTERUNG FÜR EIN SCHALLSCHUTZSCHILD AN EINEM KRAFTFAHRZEUGMOTOR
MOUNTING FOR AN ACOUSTIC PROTECTION SHIELD ON A MOTOR VEHICLE ENGINE

(30) Priorité: 11.07.2019 FR 1907822
(43) Date de publication de la demande: 18.05.2022
(73) Titulaire: TREVES PRODUCTS, SERVICES & INNOVATION, 75008 Paris (FR)
(72) Inventeur: BATAILLE, Fabien, 75008 Paris (FR); LECOMTE, Jérôme, 75008 Paris (FR); DREZET, David, 75008 Paris (FR); MARTINS, Carlos, 75008 Paris (FR)
(74) Mandataire: Sayettat, Julien Christian
(86) Numéro de dépôt international: PCT/EP2020/068815
(87) Numéro de publication internationale: WO 2021/004935

(56) Documents cités:
- EP-A1- 1 029 742
- GB-A- 2 462 373
- US-A1- 2004 170 469
- US-A1- 2006 073 310
- US-A1- 2015 075 482

## Description

L'invention concerne un assemblage d'un écran de protection acoustique sur un moteur de véhicule automobile et un écran pour un tel assemblage.

Il est connu de réaliser un assemblage d'un écran de protection acoustique sur un moteur de véhicule automobile, ledit assemblage comprenant :
- un plot métallique issu dudit moteur, ledit plot se présentant sous forme d'une tige dont l'extrémité libre présente un renflement de section radiale circulaire,
- ledit écran comprenant un corps à base de mousse de polyuréthanne moulée élastiquement compressible, un logement étant ménagé dans ledit corps pour recevoir ledit renflement.

Pour assurer le maintien du renflement dans son logement, on prévoit notamment que l'ouverture dudit logement présente une forme circulaire dont le diamètre est ajusté pour permettre un passage en force dudit renflement au travers avec élargissement temporaire de ladite ouverture, suivi de son retour élastique à son diamètre nominal, ceci de par la nature élastique de la mousse.

Cependant, on peut observer une mauvaise tenue de l'écran sur le moteur au fil du temps, la mousse présentant une souplesse trop importante pour assurer un maintien ferme.

Le document US 2006/073310 divulgue un assemblage d'un écran de protection acoustique pour un moteur de véhicule automobile.

L'invention a pour but de pallier cet inconvénient.

A cet effet, et selon un premier aspect, l'invention propose un assemblage d'un écran de protection acoustique sur un moteur de véhicule automobile, ledit assemblage comprenant :
- un plot métallique issu dudit moteur, ledit plot se présentant sous forme d'une tige dont l'extrémité libre présente un renflement de section radiale circulaire,
- ledit écran comprenant un corps à base de mousse de polyuréthanne moulée élastiquement compressible, un logement étant ménagé dans ledit corps pour recevoir ledit renflement,
ledit écran étant équipé d'une rondelle pourvue d'un orifice interne circulaire, ladite rondelle étant surmoulée par ledit corps à l'aplomb dudit logement de sorte que l'ouverture dudit logement soit définie par ledit orifice, ledit orifice présentant un diamètre ajusté pour permettre un passage en force dudit renflement au travers avec élargissement temporaire dudit orifice, le matériau constitutif de ladite rondelle présentant une capacité de déformation élastique permettant que ledit orifice retrouve sensiblement son diamètre nominal après le passage dudit renflement afin d'assurer son maintien dans ledit logement.

On précise ici que le terme « radial » est pris en référence à la direction d'extension de la tige.

Avec l'agencement proposé, le maintien de l'écran sur le moteur est notamment assuré par la rondelle qui oblige l'utilisateur à déployer un pic d'effort pour assurer l'emboitement du renflement dans son logement, et aussi quand on cherche à retirer ledit renflement dudit logement.

L'homme du métier peut aisément jouer sur le choix du matériau constitutif de la rondelle et sur le diamètre de l'orifice pour ajuster l'effort à appliquer pour insérer et retirer le renflement de son logement, ce qui permet d'optimiser la tenue de l'écran sur le moteur.

On précise en outre que fait de mettre en œuvre une - ou plusieurs - rondelle pour optimiser la fixation de l'écran sur le moteur est particulièrement économique et simple à mettre en œuvre.

Selon un deuxième aspect, l'invention propose un écran pour un tel assemblage.

D'autres particularités et avantages de l'invention apparaîtront dans la description qui suit, faite en référence aux figures jointes, dans lesquelles :
[Fig.1] est une vue schématique en coupe d'un assemblage selon une réalisation,
[Fig.2] est une vue en perspective d'une rondelle selon un mode de réalisation.

En référence aux figures, on décrit un assemblage d'un écran 1 de protection acoustique sur un moteur de véhicule automobile, ledit assemblage comprenant :
- un plot 2 métallique issu dudit moteur, ledit plot se présentant sous forme d'une tige dont l'extrémité libre présente un renflement 3 de section radiale circulaire,
- ledit écran comprenant un corps 4 à base de mousse de polyuréthanne moulée élastiquement compressible, un logement 5 étant ménagé dans ledit corps pour recevoir ledit renflement,
ledit écran étant équipé d'une rondelle 6 pourvue d'un orifice 7 interne circulaire, ladite rondelle étant surmoulée par ledit corps à l'aplomb dudit logement de sorte que l'ouverture dudit logement soit définie par ledit orifice, ledit orifice présentant un diamètre ajusté pour permettre un passage en force dudit renflement au travers avec élargissement temporaire dudit orifice, le matériau constitutif de ladite rondelle présentant une capacité de déformation élastique permettant que ledit orifice retrouve sensiblement son diamètre nominal après le passage dudit renflement afin d'assurer son maintien dans ledit logement.

Bien entendu, on peut prévoir la présence d'une pluralité de logements 5 de réception de plots 2 respectifs issus du moteur, lesdits logements étant surmontés de rondelles 6 telles que sus décrites, ceci afin de renforcer la tenue de l'écran 1 sur ledit moteur.

Selon une réalisation, la rondelle 6 est à base d'un matériau présentant une adhérence à la mousse de polyuréthanne, de manière à optimiser l'accroche entre les deux.

Selon une réalisation, la rondelle 6 est à base d'élastomère moulé, notamment d'éthylène propylène diène monomère ou de caoutchouc.

Dans ce cas, la rondelle 6 peut notamment présenter une dureté shore comprise entre 50 et 90 shores A.

Selon une autre réalisation, la rondelle 6 est à base de matériau thermoplastique moulé, un tel matériau présentant usuellement une capacité de déformation élastique pour de faibles déformations.

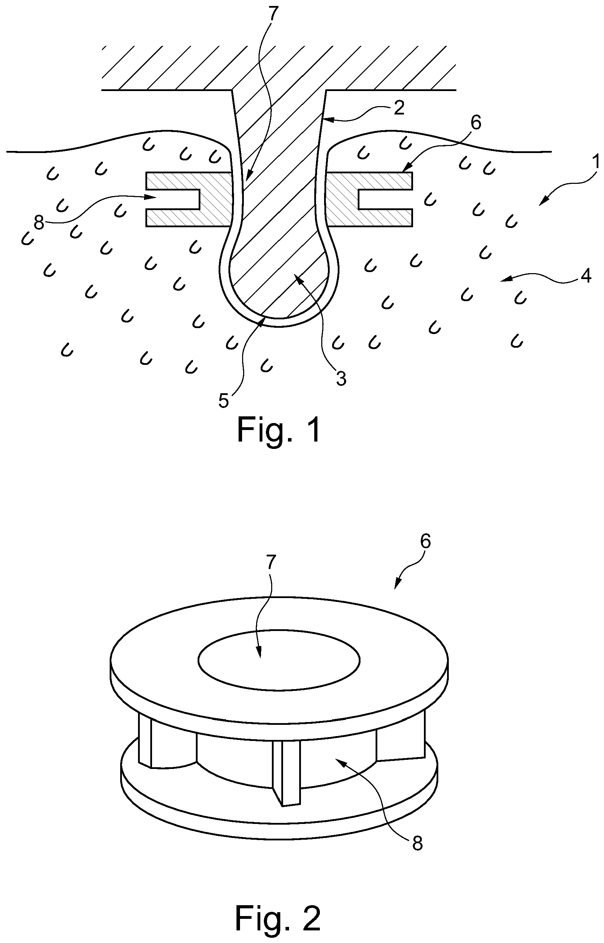

Selon le mode de réalisation représenté en figure 2, s'appliquant notamment à une rondelle 6 moulée, la tranche de la rondelle définit une tranchée 8 circulaire, de manière à maximiser sa surface surmoulée par la mousse, et donc à optimiser l'accroche entre les deux.

Selon une autre réalisation, la rondelle 6 est à base de carton, un tel matériau pouvant lui aussi présenter une capacité limitée de déformation sensiblement élastique.

Selon la réalisation représentée, le logement 5 épouse sensiblement la forme du renflement 3, de manière à éviter tout déplacement relatif entre les deux.

Selon une réalisation, la mousse présente une masse volumique comprise entre 60 et 400 g/l.

On décrit enfin un écran 1 pour un tel assemblage, ledit écran comprenant un corps 4 à base de mousse de polyuréthanne moulée élastiquement compressible, un logement 5 étant ménagé dans ledit corps pour recevoir un renflement 3 d'un plot 2 issu d'un moteur, ledit écran étant équipé d'une rondelle 6 pourvue d'un orifice 7 interne circulaire, ladite rondelle étant surmoulée par ledit corps à l'aplomb dudit logement de sorte que l'ouverture dudit logement soit définie par ledit orifice.

## Revendications

1. Assemblage d'un écran (1) de protection acoustique sur un moteur de véhicule automobile, ledit assemblage comprenant :
• un plot (2) métallique issu dudit moteur, ledit plot se présentant sous forme d'une tige dont l'extrémité libre présente un renflement (3) de section radiale circulaire,
• ledit écran comprenant un corps (4) à base de mousse de polyuréthanne moulée élastiquement compressible, un logement (5) étant ménagé dans ledit corps pour recevoir ledit renflement,
ledit assemblage étant **caractérisé en ce que** ledit écran est équipé d'une rondelle (6) pourvue d'un orifice (7) interne circulaire, ladite rondelle étant surmoulée par ledit corps à l'aplomb dudit logement de sorte que l'ouverture dudit logement soit définie par ledit orifice, ledit orifice présentant un diamètre ajusté pour permettre un passage en force dudit renflement au travers avec élargissement temporaire dudit orifice, le matériau constitutif de ladite rondelle présentant une capacité de déformation élastique permettant que ledit orifice retrouve sensiblement son diamètre nominal après le passage dudit renflement afin d'assurer son maintien dans ledit logement.

2. Assemblage selon la revendication 1, **caractérisé en ce que** la rondelle (6) est à base d'un matériau présentant une adhérence à la mousse de polyuréthanne.

3. Assemblage selon l'une des revendications 1 ou 2, **caractérisé en ce que** la rondelle (6) est à base d'élastomère moulé.

4. Assemblage selon l'une des revendications 1 ou 2, **caractérisé en ce que** la rondelle (6) est à base de matériau thermoplastique moulé.

5. Assemblage selon l'une des revendications 1 ou 2, **caractérisé en ce que** la rondelle (6) est à base de carton.

6. Assemblage selon l'une quelconque des revendications 1 à 5, **caractérisé en ce que** la tranche de la rondelle définit une tranchée (8) circulaire, de manière à maximiser sa surface surmoulée par la mousse.

7. Assemblage selon l'une quelconque des revendications 1 à 6, **caractérisé en ce que** le logement (5) épouse sensiblement la forme du renflement (3).

8. Assemblage selon l'une quelconque des revendications 1 à 7, **caractérisé en ce que** la mousse présente une masse volumique comprise entre 60 et 400 g/l.

9. Ecran (1) pour un assemblage selon l'une quelconque des revendications précédentes, ledit écran comprenant un corps (4) à base de mousse de polyuréthanne moulée élastiquement compressible, un logement (5) étant ménagé dans ledit corps pour recevoir un renflement (3) d'un plot (2) issu d'un moteur, ledit écran étant **caractérisé en ce que** qu'il est équipé d'une rondelle (6) pourvue d'un orifice (7) interne circulaire, ladite rondelle étant surmoulée par ledit corps à l'aplomb dudit logement de sorte que l'ouverture dudit logement soit définie par ledit orifice.

## Patentansprüche

1. Halterung eines Schirms (1) für Schallschutz an einem Kraftfahrzeugmotor, die Halterung umfassend:
• einen Metallklotz (2), der aus dem Motor hervorsteht, wobei der Klotz die Form eines Stabs aufweist, dessen freies Ende eine Verdickung (3) mit kreisförmigem radialem Querschnitt aufweist,
• der Schirm umfassend einen Körper (4) auf Basis eines elastisch komprimierbaren, geformten Polyurethanschaumstoffs, wobei in dem Körper eine Aufnahme (5) zum Aufnehmen der Verdickung ausgebildet ist,
wobei die Halterung **dadurch gekennzeichnet ist, dass** der Schirm mit einer Unterlegscheibe (6) ausgestattet ist, die mit einer inneren kreisförmigen Öffnung (7) versehen ist, wobei die Unterlegscheibe durch den Körper senkrecht zu der Aufnahme aufgeformt ist, sodass die Öffnung der Aufnahme durch die Öffnung definiert ist, wobei die Öffnung einen Durchmesser aufweist, der angepasst ist, um einen Durchgang durch Kraft der Verdickung durch diese mit einer zeitweiligen Erweiterung der Öffnung ermöglicht, wobei das Material, aus dem die Unterlegscheibe besteht, eine elastische Verformungsfähigkeit aufweist, die es ermöglicht, dass die Öffnung nach dem Durchgang der Verdickung im Wesentlichen wieder ihren Nenndurchmesser annimmt, um ihren Halt in der Aufnahme zu gewährleisten.

2. Halterung nach Anspruch 1, **dadurch gekennzeichnet, dass** die Unterlegscheibe (6) auf einem Material basiert, das eine Haftung an Polyurethanschaum aufweist.

3. Halterung nach einem der Ansprüche 1 oder 2, **dadurch gekennzeichnet, dass** die Unterlegscheibe (6) auf einem geformten Elastomer basiert.

4. Halterung nach einem der Ansprüche 1 oder 2, **dadurch gekennzeichnet, dass** die Unterlegscheibe (6) auf einem geformten thermoplastischen Material basiert.

5. Halterung nach einem der Ansprüche 1 oder 2, **dadurch gekennzeichnet, dass** die Unterlegscheibe (6) auf Karton basiert.

6. Halterung nach einem der Ansprüche 1 bis 5, **dadurch gekennzeichnet, dass** die Kante der Unterlegscheibe einen kreisförmigen Graben (8) definiert, um ihre mit Schaumstoff aufgeformte Fläche zu maximieren.

7. Halterung nach einem der Ansprüche 1 bis 6, **dadurch gekennzeichnet, dass** sich die Aufnahme (5) im Wesentlichen an die Form der Verdickung (3) anpasst.

8. Halterung nach einem der Ansprüche 1 bis 7, **dadurch gekennzeichnet, dass** der Schaumstoff eine Dichte zwischen 60 und 400 g/l aufweist.

9. Schirm (1) für eine Halterung nach einem der vorhergehenden Ansprüche, der Schirm umfassend einen Körper (4) auf Basis eines elastisch komprimierbaren, geformten Polyurethanschaumstoffs, wobei in dem Körper eine Aufnahme (5) ausgebildet ist, um eine Verdickung (3) eines von einem Motor hervorstehenden Klotzes (2) aufzunehmen, wobei der Schirm **dadurch gekennzeichnet ist, dass** er mit einer Unterlegscheibe (6) ausgestattet ist, die mit einer inneren kreisförmigen Öffnung (7) versehen ist, wobei die Unterlegscheibe durch den Körper senkrecht zu der Aufnahme aufgeformt ist, sodass die Öffnung der Aufnahme durch die Öffnung definiert ist.

## Claims

1. An mounting of an acoustic protection shield (1) on a motor vehicle engine, said mounting comprising:
• a metal stud (2) extending from said engine, said stud taking the form of a rod whose free end has a bulge (3) of circular cross-section,
• said shield comprising a body (4) made of elastically compressible moulded polyurethane foam, a recess (5) being formed in said body to receive said bulge,
said mounting being **characterised in that** said shield is fitted with a washer (6) provided with a circular internal orifice (7), said washer being overmoulded by said body directly above said recess so that the opening of said recess is defined by said orifice, said orifice having a diameter adjusted to allow said bulge to be forced through it with temporary enlargement of said orifice, the material constituting said washer having an elastic deformation capacity allowing said orifice to substantially return to its nominal diameter after the passage of said bulge in order to ensure its retention in said recess.

2. An mounting according to claim 1, **characterised in that** the washer (6) is made of a material exhibiting adhesion to polyurethane foam.

3. An mounting according to one of claims 1 or 2, **characterised in that** the washer (6) is made of moulded elastomer.

4. An mounting according to one of claims 1 or 2, **characterised in that** the washer (6) is made of moulded thermoplastic material.

5. An mounting according to any one of claims 1 or 2, **characterised in that** the washer (6) is made of cardboard.

6. An mounting according to any one of claims 1 to 5, **characterised in that** the edge of the washer defines a circular groove (8), so as to maximise its surface area overmoulded by the foam.

7. An mounting according to any one of claims 1 to 6, **characterised in that** the housing (5) substantially conforms to the shape of the bulge (3).

8. An mounting according to any one of claims 1 to 7, **characterised in that** the foam has a density of between 60 and 400 g/l.

9. A shield (1) for an mounting according to any one of the preceding claims, said shield comprising a body (4) made of elastically compressible moulded polyurethane foam, a recess (5) being formed in said body to receive a bulge (3) of a stud (2) from a motor, said screen being **characterised in that** it is fitted with a washer (6) provided with a circular internal orifice (7), said washer being overmoulded by said body directly above said recess so that the opening of said recess is defined by said orifice.
